# EUROPÄISCHE PATENTSCHRIFT

(11) **EP 0 926 024 B1**
(45) Veröffentlichungstag und Bekanntmachung des Hinweises auf die Patenterteilung: **09.07.2003**
(21) Anmeldenummer: 98123635.9
(22) Anmeldetag: 10.12.1998
(51) Int. Cl.: B60R 25/04, B60R 25/00, B60R 25/02, E05B 49/00

(54) **Schliesssystem, insbesondere für Kraftfahrzeuge**
Locking system, in particular for a motor vehicle
Système de verrouillage, notamment pour un véhicule à moteur

(30) Priorität: 18.12.1997 DE 19756341
(43) Veröffentlichungstag der Anmeldung: 30.06.1999
(73) Patentinhaber: Marquardt GmbH, 78604 Rietheim-Weilheim (DE)
(72) Erfinder: Geiger, August, 78607 Talheim (DE); Müller, Karl, 78628 Rottweil-Neufra (DE)
(74) Vertreter: Patentanwälte Eisele, Otten & Roth

(56) Entgegenhaltungen:
- EP-A- 0 596 762
- EP-A- 0 767 092
- EP-A- 0 918 001
- US-A- 3 985 009
- US-A- 4 837 567
- PATENT ABSTRACTS OF JAPAN vol. 008, no. 080 (M-289), 12. April 1984 (1984-04-12) & JP 58 224835 A (KOKUSAN KINZOKU KOGYO KK), 27. Dezember 1983 (1983-12-27)

## Beschreibung

Die Erfindung betrifft ein elektronisches Schloß nach dem Oberbegriff des Patentanspruchs 1.

Ein derartiges elektronisches Schloß wird in Kraftfahrzeugen als elektronisches Zündschloß zum Betrieb eines zugehörigen Betriebsaggregats, wie einer Motorsteuerung, einer Wegfahrsperre o. dgl. verwendet.

Aus der WO 95/09746 ist ein Schließsystem für ein Kraftfahrzeug bekannt, das aus einem elektronischen Schloß und einem zugehörigen elektronischen Schlüssel besteht. Das Schloß besitzt eine Aufnahme, in die der Schlüssel einführbar ist. Im Schloß befindet sich ein lediglich schematisch angedeutetes Schaltelement, das durch die Bewegung des Schlüssels beim Einführen in die Aufnahme betätigbar ist. Die Betätigung des Schaltelements schaltet dann den bestimmungsgemäßen Betrieb von Schlüssel und Schloß ein, wobei der in der Aufnahme befindliche Schlüssel mit dem Schloß wenigstens ein codiertes Betriebssignal austauscht. Nach positiver Auswertung des übertragenen Betriebssignals, d.h. wenn es sich um den berechtigten Schlüssel handelt, ist die Freigabe des Schlosses zum Betrieb des Betriebsaggregats auslösbar.

Aus der EP 0 767 092 A2 sowie der EP 0 596 762 A1 ist ein mit einer Elektronik versehenes Zündschloß für ein Kraftfahrzeug bekannt, das mittels eines zugehörigen Schlüssels betätigbar ist. Die Elektronik ist zur Energieeinsparung in einen Schlafzustand versetzbar. Im Zündschloß ist ein Schaltelement angeordnet, das durch die Bewegung des Schlüssels im Zündschloß betätigt wird und dadurch die Elektronik vom Schlafzustand in einen Bereitschaftszustand versetzt. Im Bereitschaftszustand ist die Inbetriebnahme eines Betriebsaggregats des Kraftfahrzeugs durch das Zündschloß ermöglicht.

Beim Betrieb des Kraftfahrzeuges kommen Betriebsunterbrechungen vor, wobei in den Betriebsunterbrechungen die Außerbetriebnahme des Betriebsaggregats erfolgen kann. Zur erneuten Inbetriebnahme des Betriebsaggregats ist es bei den bekannten Schlössern zumindest zum Teil erforderlich, den Schlüssel aus der Aufnahme herauszunehmen und erneut einzuführen, um den bestimmungsgemäßen Betrieb zwischen Schlüssel und Schloß wiederum einzuleiten.

Der Erfindung liegt die Aufgabe zugrunde, das Schloß derart weiterzubilden, daß die erneute Inbetriebnahme des Betriebsaggregats nach einer Betriebsunterbrechung vereinfacht wird. Insbesondere soll die Ausgestaltung des im Schloß befindlichen Schaltelements an diese Anforderungen angepaßt sein.

Diese Aufgabe wird bei einem gattungsgemäßen elektronischen Schloß durch die kennzeichnenden Merkmale des Anspruchs 1 gelöst.

Das Schloß ist zum Betrieb des Betriebsaggregats in einen Bereitschaftszustand versetzbar. Nach Beendigung des Betriebs des Betriebsaggregats wird die Sperrung des Schlosses ausgelöst und das Schloß vom Bereitschaftszustand in einen Schlafzustand mit eingeschränkter Funktionalität und verringerter Energieaufnahme gebracht. Wird der Schlüssel danach vom Benutzer bewegt, so wird dabei ein Schaltelement betätigt und dadurch ein als "Weck"-Signal für das Schloß dienendes Signal erzeugt, das das Schloß vom Schlafzustand in den Bereitschaftszustand rückführt. Weitere Ausgestaltungen der Erfindung sind Gegenstand der Unteransprüche.

Es kann sich anbieten, das Schloß mit einer Verzögerungszeit nach Beendigung des Betriebs des Betriebsaggregats vom Bereitschaftszustand in den Schlafzustand zu versetzen. Bei einer derartigen Weiterbildung kann somit die Dauer der Betriebsunterbrechung als Kriterium zur Überführung des Schlosses in den Schlafzustand herangezogen werden. Weiter kann auch bei Entfernen des Schlüssels aus der Aufnahme das Schloß in den Schlafzustand gebracht werden.

Die Inbetriebnahme des Betriebsaggregats kann nach Zurücklegen eines Bewegungsweges durch den Schlüssel erfolgen. Am Beginn des Bewegungsweges wird dabei zunächst das "Weck"-Signal durch das Schaltelement abgegeben. Anschließend ist die Freigabe des Schlosses nach positiver Auswertung des übertragenen Betriebssignals auslösbar. Beim Einführen des Schlüssels in die Aufnahme kann ein weiteres Schaltelement betätigbar sein, das das "Schlüsselsteckt"-Signal erzeugt. Das "Schlüssel-steckt"-Signal versetzt das Schloß ebenfalls vom Schlafzustand in den Bereitschaftszustand. Die beiden Signale kennzeichnen somit den näheren Grund der Betriebsunterbrechung, womit diese Signale gegebenenfalls auch zur Auslösung sonstiger Funktionen im Kraftfahrzeug herangezogen werden können.

In besonderer Weiterbildung bietet es sich an, im Schloß ein Übertragungselement vorzusehen, das mittels des Schlüssels bewegbar ist und das auf das Schaltelement betätigend einwirkt. Das Betätigungsorgan des Schaltelements besitzt einen kleinen Betätigungshub. Das Schaltelement ist mit einem Abstand zum Übertragungselement angeordnet, beispielsweise auf einer im Schloß befindlichen Leiterplatte. Ein im wesentlichen linear beweglicher Stößel ist einerseits am Übertragungselement angelenkt und wirkt andererseits auf das Betätigungsorgan des Schaltelements ein. Dabei ist bereits bei einem kleinen Bewegungsweg des Schlüssels der Stößel wenigstens um den Betätigungshub bewegbar, so daß das Schaltelement umschaltet. Diese Ausgestaltung gewährleistet auch, daß die Rückführung des Schlosses in den Bereitschaftszustand für den Nutzer komfortabel und ohne bemerkbare Wartezeiten erfolgen kann.

Das Schaltelement ist vorzugsweise als elektrischer Schalter ausgebildet und zwar als Tastschalter. Zweckmäßigerweise ist der Tastschalter mit einem in sich gekapselten Gehäuse versehen, so daß auch unter den rauhen Einsatzbedingungen im Fahrzeug eine schädigende Verschmutzung des Schalters nicht zu befürchten ist. Es bietet sich an, den Tastschalter als SMD(Surface mounted device)-Taste auszubilden, so daß der Tastschalter mit seinen Anschlüssen in SMD-Technik auf der Leiterplatte befestigbar ist, wodurch eine erhebliche Montagevereinfachung für das Schloß erzielbar ist.

Die Anlenkung zwischen dem Stößel und dem Übertragungselement kann aus einer kraft- und/oder formschlüssigen Koppelung, beispielsweise aus einer Zapfen-Ansatz-Verbindung, bestehen. Der Stößel ist mit einer Feder gegen das Betätigungsorgan des Schaltelements vorgespannt, derart daß bei der Bewegung des Übertragungselements durch den Schlüssel die Zapfen-Ansatz-Verbindung wenigstens um eine dem Betätigungshub entsprechende Strecke freigegeben ist. Aufgrund der Federspannung bewegt sich dann der Stößel in Richtung auf das Betätigungsorgan des Schaltelements. Es handelt sich hierbei um eine trotz des kleinen Betätigungsweges fehlerunanfällige Betätigung für die Schaltelemente.

Zum einen kann das Übertragungselement als Rotor ausgebildet sein, wobei der in der Aufnahme befindliche Schlüssel auf den Rotor zu dessen Drehung einwirkt. Eine Drehsperre ist in und außer, Zusammenwirken mit dem Rotor zur Sperrung oder Freigabe des Rotors bringbar. Der Rotor ist um einen kleinen Freiwinkel von beispielsweise maximal 10 Grad bis zum Wirksamwerden der Drehsperre bei gesperrtem Rotor bewegbar. Das Umschalten des Schaltelements, das das "Weck"-Signal erzeugt, ist dann bereits bei Bewegung innerhalb des Freiwinkels bewirkbar. Wird der freigegebene Rotor anschließend über den Freiwinkel hinaus gedreht, so wirkt der Rotor mit weiteren Schaltelementen in der Art eines Lastschalters zum Starten des Motors o. dgl. zusammen.

Zum anderen kann das Übertragungselement aus einem linear beweglichen Stabelement sowie einem senkrecht dazu beweglichen Hülsenelement bestehen, wobei beim Einführen des Schlüssels in die Aufnahme der Schlüssel auf das Stabelement zu dessen Verschiebung einwirkt. Dabei wirkt das Stabelement wiederum bewegend auf das Hülsenelement ein. Der Stößel zum Umschalten des Schaltelementes, das das "Schlüssel-steckt"-Signal erzeugt, ist am Hülsenelement angelenkt. Zweckmäßigerweise sind das Stabelement, das insbesondere als Lichtleitstab zur Übertragung des optischen Betriebssignals ausgebildet ist, in einem mittigen Durchbruch im Rotor und das Hülsenelement am Rotor angeordnet.

Die mit der Erfindung erzielten Vorteile bestehen insbesondere darin, daß selbst bei kurzen Betriebsunterbrechungen das Schloß in einen Schlafzustand versetzbar ist. In diesem Schlafzustand erfolgt lediglich eine geringe Energieaufnahme, woraus eine erhebliche Energieeinsparung resultiert. Zur erneuten Inbetriebnahme wird das Schloß sofort in den Bereitschaftszustand versetzt, so daß die im Schlafzustand eingeschränkte Funktionalität für den Benutzer nicht weiter bemerkbar ist. Insbesondere ist keine zusätzliche Maßnahme, wie das Entfernen und erneute Einstecken des Schlüssels in die Aufnahme erforderlich. Dadurch erfährt der Benutzer eine Steigerung des Bedienungskomforts für das Schloß.

Der Bedienungskomfort wird durch die Ausbildung des Schaltelements noch gesteigert. Die Betätigung des Schaltelements erfolgt bereits bei einer geringen Bewegung des Schlüssels, so daß praktisch keine bemerkbare Verzögerungszeit für den Benutzer auftritt. Außerdem ist die Betätigung des Schaltelements fehlerunanfällig und ausfallssicher, so daß auch unter den rauhen Einsatzbedingungen im Kraftfahrzeugbetrieb die Betriebssicherheit des Schlosses gesteigert wird. Letztendlich ist das Schloß trotz der Steigerung des Komforts kompakt ausgebildet und kann somit auf einfache Weise in das Kraftfahrzeug eingebaut werden.

Ein Ausführungsbeispiel der Erfindung und Weiterbildungen sind in den Zeichnungen dargestellt und werden im folgenden näher beschrieben. Es zeigen
- Fig. 1: schematisch eine Funktionsübersicht eines Schließsystems in einem Kraftfahrzeug,
- Fig. 2: einen Längsschnitt durch das Schloß aus Fig. 1,
- Fig. 3: einen Schnitt entlang der Linie 3-3 in Fig. 2 und
- Fig. 4: einen Schnitt entlang der Linie 4-4 in Fig. 2.

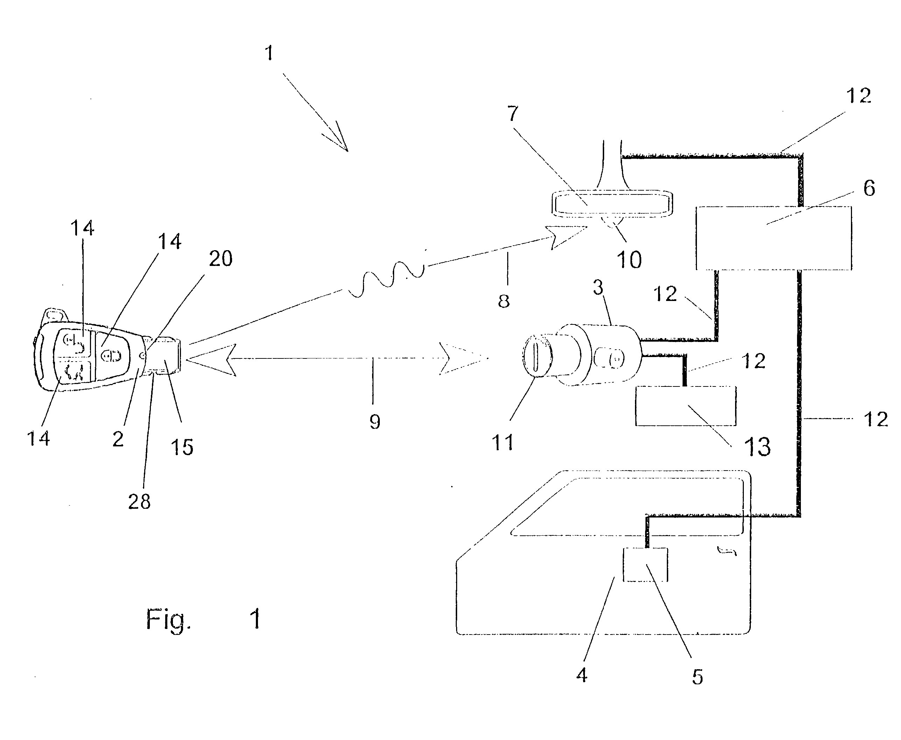

In Fig. 1 ist ein für ein Kraftfahrzeug bestimmtes Schließsystem 1 schematisch gemäß einem Teil seiner Funktionen gezeigt. Das Schließsystem 1 besteht aus einem elektronischen Schloß 3 und zwar aus einem elektronischen Zündschloß sowie einem zugehörigen elektronischen Schlüssel 2. Das Schloß 3 steht mit einem zugehörigen Betriebsaggregat 13, wie beispielsweise einer Motorsteuerung, einer elektronischen Wegfahrsperre o. dgl. des Kraftfahrzeugs, über ein Bussystem 12, wie den bekannten CAN-Bus, in Verbindung.

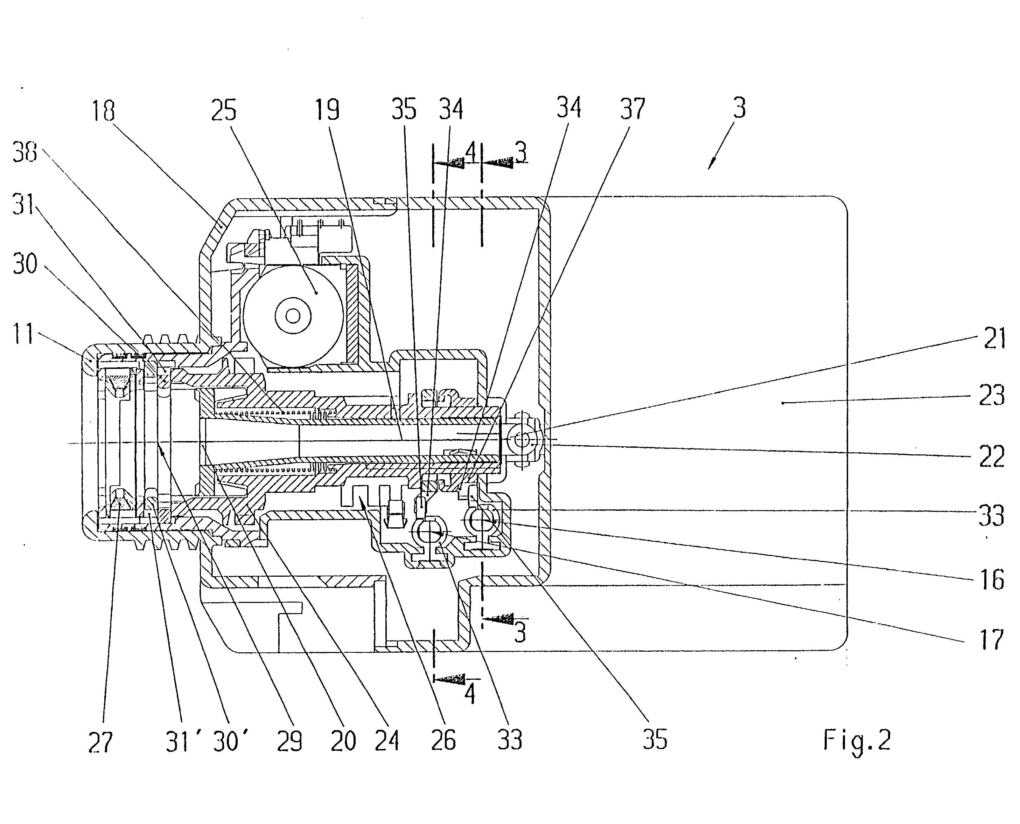

Zur Inbetriebnahme des Kraftfahrzeugs, beispielsweise zum Starten des Motors des Kraftfahrzeugs, wird der Schlüssel 2 mit seinem Frontteil 15 in eine Aufnahme 11 des gesperrten Schlosses 3 eingeführt. Dabei wirkt der Schlüssel 2 auf Mittel ein, die diese Bewegung des Schlüssels 2 auf ein im Schloß 3 befindliches, in Fig. 2 sichtbares Schaltelement 16 übertragen, so daß das Schaltelement 16 betätigt wird und ein Signal erzeugt. Es handelt sich bei diesem Schaltelement 16 um den sogenannten "Schlüssel-steckt"-Schalter, der durch das Einführen des Schlüssels 2 in die Aufnahme 11 betätigt wird und dabei das sogenannte "Schlüssel-steckt"-Signal erzeugt. Das "Schlüssel-steckt"-Signal bewirkt, daß das Schloß 3 in einen Bereitschaftszustand übergeht, und eine induktive Energieübertragung vom Schloß 3 auf den Schlüssel 2 einschaltet, so daß die für den bestimmungsgemäßen Betrieb des Schlüssels 2 benötigte Energie vom Schloß 3 geliefert wird.

Im Bereitschaftszustand des Schlosses 3 tauscht dann der in der Aufnahme 11 befindliche Schlüssel 2 mit dem Schloß 3 wenigstens ein codiertes Betriebssignal 9 aus, wobei es sich beispielsweise um Infrarotsignale handeln kann. Bevorzugterweise erfolgt dabei eine bidirektionale Codeübertragung zwischen dem Schlüssel 2 und dem Schloß 3. Nach positiver Auswertung des übertragenen Betriebssignals 9 ist die Freigabe für das Schloß 3 auslösbar. Beim gesperrten Schloß 3, das sich in einer Ausgangsstellung befindet, kann lediglich das Einführen des Schlüssels 2 in die Aufnahme 11 vorgenommen werden, während beim freigegebenen Schloß 3 eine weitere Bewegung des Schlüssels 2 im Schloß 3 ermöglicht ist. Das Betriebsaggregat 13 kann dann über das Schloß 3 in Betrieb genommen werden, indem der Schlüssel 2 im Schloß 3 entlang des zugeordneten Bewegungsweges bewegt wird und zwar bevorzugterweise aus der Ausgangsstellung des Schlosses 3 um einen bestimmten Winkel in eine Betriebsstellung gedreht wird.

Zur Beendigung des Betriebs des Betriebsaggregats 13, beispielsweise zum Abstellen des Motors des Kraftfahrzeugs, wird der Schlüssel 2 wiederum von der Betriebsstellung in die Ausgangsstellung des Schlosses 3 zurückbewegt und danach in der Regel der Schlüssel 2 aus der Aufnahme 11 entfernt. Nach Erreichen der Ausgangsstellung ist die Sperrung des Schlosses 3 für die weitere Bewegung des Schlüssels 2 im Schloß 3 auslösbar. Gegebenenfalls kann die Auslösung der Sperrung auch erst durch das fehlende "Schlüssel-steckt"-Signal beim Entfernen des Schlüssels 2 aus dem Schloß 3 erfolgen. Weiter wird dabei das Schloß 3 zur Energieeinsparung vom Bereitschaftszustand in einen Schlafzustand mit eingeschränkter Funktionalität und verringerter Stromaufnahme, den sogenannten "Sleep-Mode", versetzt. Eine erneute Inbetriebnahme des Kraftfahrzeugs läuft durch Einstecken des Schlüssels 2 in das Schloß 3 wie oben geschildert ab.

Es gibt jedoch auch Fälle, in denen der Nutzer den Schlüssel 2 nicht aus der Aufnahme 11 entfernt. Dies kann beispielsweise der Fall sein, wenn der Betrieb des Betriebsaggregats 13 nur kurzfristig für eine Pause unterbrochen wird, in der der Nutzer das Fahrzeug nicht verläßt. Aus Sicherheitsgründen wird jedoch auch dann die Sperrung des Schlosses 3 vorgenommen, nachdem die Ausgangsstellung des Schlosses 3 erreicht ist, sowie das Schloß 3 in den Schlafzustand versetzt. Gegebenenfalls kann auch eine gewisse Verzögerungszeit nach Erreichen der Ausgangsstellung vorgesehen sein, nach der das Schloß 3 sperrbar und vom Bereitschaftszustand in den Schlafzustand überführbar ist.

Um in diesem Fall bei erneutem Starten des Kraftfahrzeugs zu vermeiden, daß der Schlüssel 2 zunächst abgezogen und wieder neu gesteckt werden muß, besitzt das Schloß 3 ein in Fig. 2 gezeigtes, weiteres Schaltelement 17. Das Schaltelement 17 erzeugt bei Betätigung durch den Schlüssel 2 ein Signal, das sogenannte "Weck"-Signal. Dieses "Weck"-Signal wird bereits am Beginn des weiteren Bewegungsweges des Schlüssels 2 im Schloß 3 vom Schaltelement 17 abgegeben und führt dann unmittelbar das Schloß 3 vom Schlafzustand in den Bereitschaftszustand zurück. Im Bereitschaftszustand kann anschließend die Übertragung des Betriebssignals 9 erfolgen und bei positiver Auswertung des Betriebssignals 9 ist erneut die Freigabe des Schlosses 3 auslösbar. Die Inbetriebnahme des Betriebsaggregats 13 erfolgt wiederum nach Zurücklegen des gewissen weiteren Bewegungsweges durch den Schlüssel 2 gemäß den obigen Ausführungen.

Wie man sieht, können entsprechend der jeweiligen Situation sowohl das "Weck"-Signal als auch das "Schlüssel-steckt"-Signal das Schloß 3 vom Schlafzustand in den Bereitschaftszustand zurückführen. Weiter verhindert das Vorliegen des "Schlüssel-steckt"-Signals bei betätigtem Schaltelement 16 ein Einrasten der ebenfalls vom Schloß 3 betätigten, nicht weiter gezeigten elektromagnetischen Lenkungsverriegelung im Kraftfahrzeug.

Zusätzlich kann der Schlüssel 2 für die Ansteuerung weiterer Funktionen verwendet werden, wie anhand der Fig. 1 ersichtlich ist. Mit Hilfe des elektronischen Schlüssels 2 läßt sich das Schließsystem 1 zur Zugangsberechtigung fernbedienbar ansteuern, im vorliegenden Fall lassen sich die Autotüren 4 des Kraftfahrzeugs fernbedienbar bis zu einer gewissen maximalen Entfernung vom Kraftfahrzeug ver- und entriegeln.

Für die Ansteuerung dieser weiteren Funktionen ist zwischen dem Schlüssel 2 und einer zentral im Kraftfahrzeug, beispielsweise am Innenspiegel 7, angeordneten Empfangs- und Sendeeinrichtung 10 für das Schließsystem 1 ein codiertes Betriebssignal 8 übertragbar. Als Betriebssignal 8 für den Schlüssel 2 werden in der Regel elektromagnetische Signale, wie Hf-Signale und/oder Infrarot-Signale o. dgl., verwendet. Die Übertragung des Betriebssignals 8 ist mittels am Gehäuse des Schlüssels 2 befindlicher Betätigungsorgane 14 durch den Benutzer auslösbar. Das übertragene Betriebssignal 8 wird einer im Kraftfahrzeug befindlichen

Signalverarbeitungseinrichtung 6 zugeführt und nach positiver Auswertung des Betriebssignals 8, d.h. falls es sich um den berechtigten Schlüssel 2 handelt, wird ein beispielsweise in der jeweiligen Autotüre 4 befindliches Steuergerät 5, das mit der Signalverarbeitungseinrichtung 6 über das Bussystem 12 in Verbindung steht, zur Ver- oder Entriegelung der Autotüren 4 betätigt. Bei dem Steuergerät 5 kann es sich zum Beispiel um eine an sich bekannte Zentralverriegelung handeln.

Die nähere Ausbildung des in Fig. 1 lediglich schematisch gezeigten elektronischen Schlosses 3 als ein elektronisches Zündschloß für ein Kraftfahrzeug ist in einer Weiterbildung in den Fig. 2 bis 4 zu sehen.

Das Schloß 3 besitzt ein Gehäuse 18, das beispielsweise am Armaturenbrett des Kraftfahrzeugs angebracht ist. Für den Nutzer ist die Aufnahme 11, die am Frontteil des Gehäuses 18 befindlich ist, zur Einführung des Schlüssels 2 zugänglich. Der in der Aufnahme 11 befindliche Schlüssel 2 steht in direkter Wirkverbindung mit einem Rotor 24. Eine in der Art einer elektromagnetischen Sperre ausgebildete Drehsperre 25 ist in oder außer Zusammenwirkung mit dem Rotor 24 bringbar, wodurch eine Sperrung oder Freigabe des Schlosses 3 bewirkbar ist.

Beim Betriebssignal 9 handelt es sich bevorzugterweise um optische Signale, beispielsweise um Infrarot-Signale. Zur Erzeugung und Verarbeitung dieser optischen Signale besitzen sowohl der Schlüssel 2 als auch das Schloß 3 elektrooptische Wandlerelemente. Im Gehäuse 18 des Schlosses 3 befindet sich eine Leiterplatte 23, die zur Aufnahme der elektrooptischen Wandlerelemente sowie der weiteren elektronischen und/oder elektrischen Komponenten des Schlosses 3 dient. Die Leiterplatte 23 ist mit einem Abstand zum Rotor 24 angeordnet. Der Austausch der codierten optischen Signale zwischen dem Schlüssel 2 und dem Schloß 3 erfolgt im Gehäuse 18 des Schlosses 3 über einen im wesentlichen linearen Lichtleitstab 19, der sich in einem mittigen Durchbruch im Rotor 24 befindet, sowie über ein optisches Umlenkelement 22. Der Lichtleitstab 19 und das optische Umlenkelement 22 bestehen aus einem für die optischen Signale transparenten Kunststoff. Mit dem der Aufnahme 11 zugeordneten ersten Ende 20 des Lichtleitstabes 19 steht der Schlüssel 2 in optischer Wirkverbindung. An dem der Aufnahme 11 gegenüberliegenden zweiten Ende 21 des Lichtleitstabes 19 ist das optische Umlenkelement 22 angeordnet, das zur Weiterleitung unter Änderung der Richtung der optischen Signale zwischen dem Lichtleitstab 19 und den elektrooptischen Wandlerelementen auf der Leiterplatte 23 im Schloß 3 dient.

Nach Austausch des Betriebssignals 9 und dessen positiver Auswertung erfolgt die Freigabe des Schlosses 3 durch die Drehsperre 25, so daß der Rotor 24 durch den Schlüssel 2 aus der Ausgangsstellung in bestimmte Drehstellungen bewegbar ist. Im Gehäuse 18 des Schlosses 3 befinden sich in unmittelbarer Nähe des Rotors 24 Schaltelemente, die in der Art eines elektrischen Lastschalters 26 ausgebildet sind. Der Lastschalter 26 wird über eine Nockensteuerung am Rotor 24 in bestimmten Drehstellungen des Rotors 24 geschaltet, wodurch die Stromversorgung des Kraftfahrzeugs über das Schloß 3 geschaltet wird, beispielsweise die Zündung für den Motor des Kraftfahrzeugs eingeschaltet wird.

In der Aufnahme 11 befindet sich ein Schieber 27, der in eine in Fig. 1 sichtbare Nut 28 am Schlüssel 2 eingreift, wenn der Schlüssel 2 in die Aufnahme 11 eingesteckt ist. Der Schieber 27 verhindert eine unbeabsichtigte Entnahme des Schlüssels 2 aus der Aufnahme 11, sobald der Rotor 24 mittels des Schlüssels 2 aus seiner Ausgangsstellung gedreht ist. Im Bereich der Aufnahme 11 des Schlosses 3 ist ein weiterer Doppelsperrschieber 29 zu sehen. Der Doppelsperrschieber 29 besteht aus einem gegenläufigen Schieberpaar 30, 30', das in eine korrespondierende Nut 31, 31' im Gehäuse 18 zur Verrastung des Rotors 24 eingreift. Beim korrekten Stecken des Schlüssels 2 in die Aufnahme 11 wird das Schieberpaar 30, 30' durch den Schlüssel 2 aus der Nut 31, 31' bewegt, so daß die Verrastung aufgehoben ist und der Rotor 24 gedreht werden kann. Der Doppelsperrschieber 29 verhindert somit das Drehen des Rotors 24, wenn der Schlüssel 2 nicht oder nicht vollständig in der Aufnahme 11 steckt und das Schloß 3 nicht gesperrt ist.

Im Gehäuse 18 des Schlosses 3 befinden sich die Schaltelemente 16, 17, die als "Schlüssel-steckt"-Schalter und "Weck"-Schalter dienen. Die Schaltelemente 16, 17 sind mittels je eines im Gehäuse 18 befindlichen Übertragungselements betätigbar, das durch den Schlüssel 2 translativ und/oder rotativ bewegbar ist, wobei der Schlüssel 2 in der Aufnahme 11 in direkter Wirkverbindung mit dem Übertragungselement zu dessen Bewegung steht. Die Betätigung des Schaltelements 16 für die Erzeugung des "Schlüsselsteckt"-Signals erfolgt durch die translative Bewegung des Schlüssels 2 bei der Einführung in die Aufnahme 11 des Schlosses 3, wodurch der Lichtleitstab 19 gegen die Kraft einer Feder 38 verschoben wird. Die Verschiebung des als Stabelement dienenden Lichtleitstabs 19 wird über eine nicht weiter gezeigte Kulisse, wie über einen angeformten Keil, auf ein am Rotor 24 angeordnetes Hülsenelement 37 übertragen, das durch die Linearbewegung des Stabelements 19 senkrecht zum Stabelement 19 bewegt wird. Das Übertragungselement für das Schaltelement 16 besteht somit aus dem Stabelement 19 und dem Hülsenelement 37. Die Betätigung des Schaltelements 17 für die Erzeugung des "Weck"-Signals erfolgt durch die rotative Bewegung des Schlüssels 2 in der Aufnahme 11, wodurch der Rotor 24 gedreht wird. Bei dem Übertragungselement für das Schaltelement 17 handelt es sich folglich um den Rotor 24. Die Ausgestaltung der Wirkverbindung zwischen den Schaltelementen 16, 17 und den Übertragungselementen soll nachfolgend näher erläutert werden.

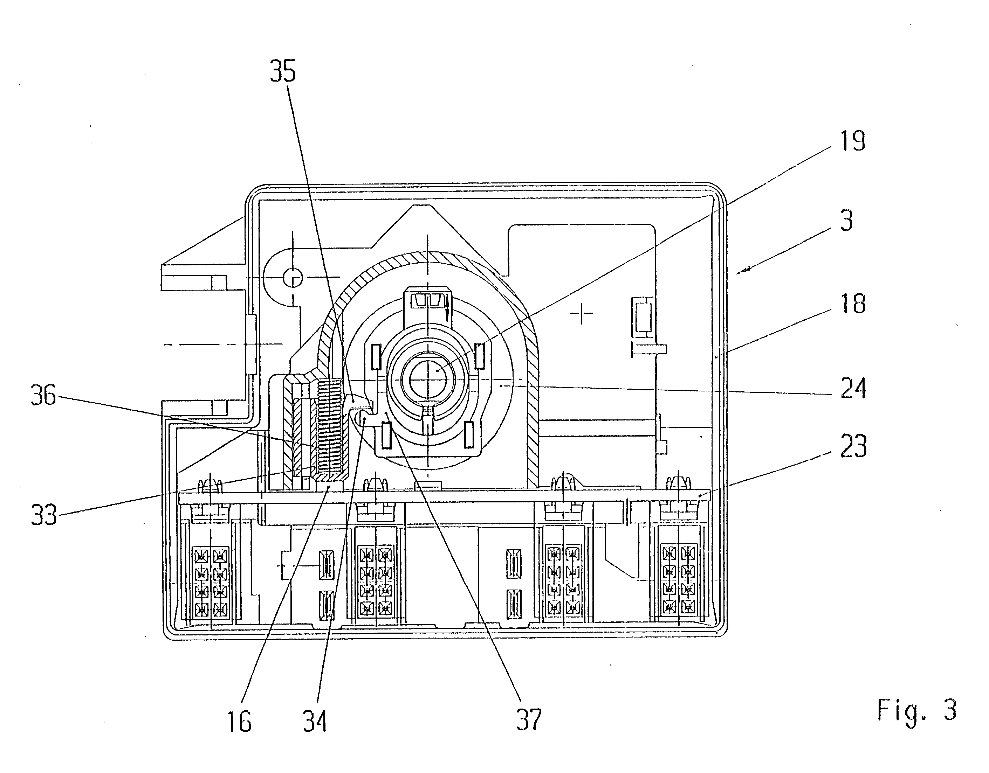

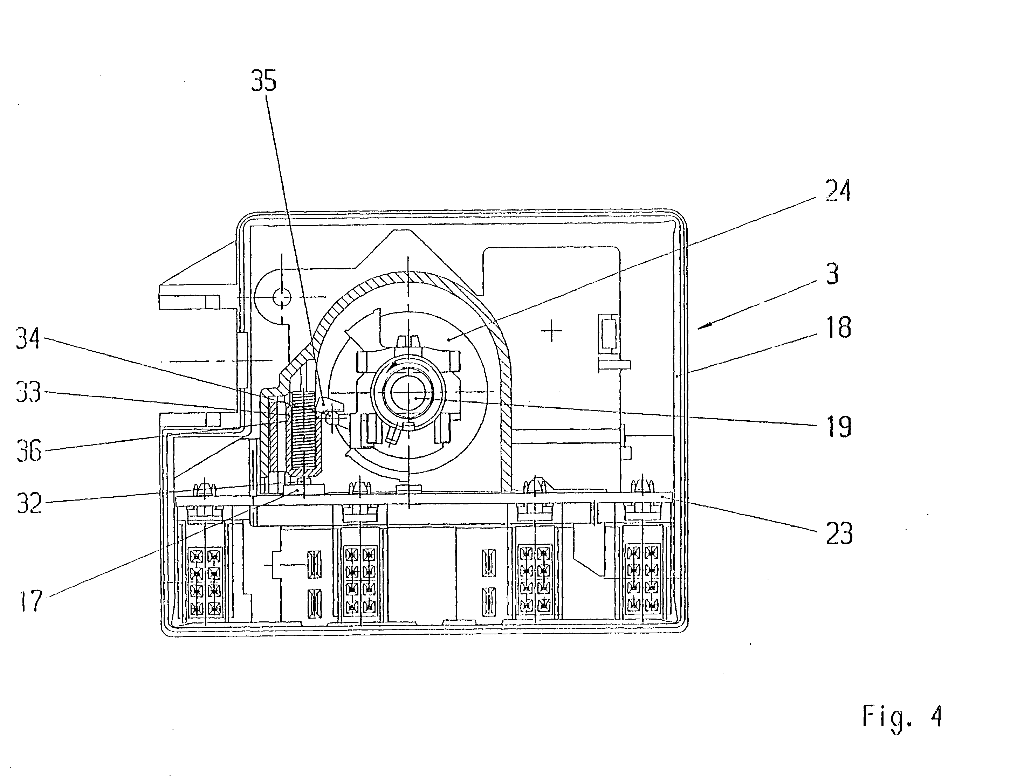

Wie in Fig. 3 und 4 zu sehen ist, sind die Schaltelemente 16, 17 als elektrische Schalter ausgebildet, wobei das Betätigungsorgan 32 des Schaltelements 16, 17 einen kleinen oder geringen Betätigungshub besitzt. Die Schaltelemente 16, 17 sind mit einem Abstand zum jeweiligen Übertragungselement angeordnet. Bevorzugterweise befinden sich die Schaltelemente 16, 17 auf der mit einem Abstand zum Übertragungselement angeordneten Leiterplatte 23. Bei den Schaltelementen 16, 17 kann es sich um Tastschalter handeln. Das Schaltelement 16, 17 ist mit einem in sich gekapselten Gehäuse versehen. Der Tastschalter ist zweckmäßigerweise als SMD(Surface mounted device)-Taste ausgebildet, so daß der Tastschalter mit seinen Anschlüssen in SMD-Technik auf der Leiterplatte 23 befestigbar ist. Ein im wesentlichen linear beweglicher Stößel 33 ist einerseits am Übertragungselement, und zwar am Rotor 24 beziehungsweise Hülsenelement 37, angelenkt sowie wirkt andererseits auf das Betätigungsorgan 32 des Schaltelements 16, 17 ein. Dadurch ist bereits bei einem kleinen Bewegungsweg des Schlüssels 2 der Stößel 33 wenigstens um den Betätigungshub bewegbar, derart daß das Schaltelement 16, 17 umschaltet.

Die Anlenkung des Stößels 33 am Übertragungselement erfolgt mittels einer kraft- und/oder formschlüssigen Koppelung, so daß der Stößel 33 lediglich einen geringen Hub bei Bewegung des Schlüssels 2 auszuführen hat. Die kraftschlüssige Koppelung zwischen dem Übertragungselement und dem Stößel 33 kann aus einer Zapfen-Ansatz-Verbindung bestehen. Hierzu befinden sich am Rotor 24 sowie am Hülsenelement 37 ein Zapfen 34 und am Stößel 33 ein seitlicher Ansatz 35. Der Stößel 33 ist mit einer Feder 36 gegen das Betätigungsorgan 32 des Schaltelements 16, 17 vorgespannt, derart daß bei der Bewegung des Übertragungselements durch den Schlüssel 2 die Zapfen-Ansatz-Verbindung wenigstens um eine dem

Betätigungshub entsprechende Strecke freigegeben wird. Dadurch bewegt sich der Stößel 33 aufgrund der Federspannung in Richtung auf das Betätigungsorgan 32 des Schaltelements 16, 17 zu.

Wie bereits ausgeführt, ist das Übertragungselement im Schloß 3 für den "Weck"-Schalter 17 als Rotor 24 ausgebildet. Der in der Aufnahme 11 befindliche Schlüssel 2 wirkt auf den.Rotor 24 zu dessen Drehung ein. Aufgrund der obigen Ausführungen ist unmittelbar ersichtlich, daß bereits bei einem kleinen Drehwinkel des Rotors 24 das Umschalten des Schaltelements 17 bewirkbar ist. Bei diesem Drehwinkel handelt es sich um einen Freiwinkel bis zum Wirksamwerden der in Zusammenwirkung mit dem Rotor 24 befindlichen Drehsperre 25. Der Freiwinkel weist zweckmäßigerweise maximal 10 Grad auf. Wird der Schlüssel 2 aus der Ausgangsstellung des Schlosses 3 bewegt, so erzeugt das Schaltelement 17 dann bereits am Beginn des Bewegungsweges das "Weck"-Signal. Es erfolgt somit die Überführung des Schlosses 3 aus dem Schlafzustand in den Bereitschaftszustand am Beginn der Drehbewegung des Schlüssels 2. Bei einer nachfolgenden Drehung über den Freiwinkel hinaus, soweit das Schloß 3 freigegeben wird, wirkt der Rotor 24 dann, wie bereits beschrieben, mit den Schaltelementen des Lastschalters 26 direkt zusammen.

Die Erfindung ist nicht auf das beschriebene und dargestellte Ausführungsbeispiel beschränkt. Sie umfaßt vielmehr auch alle fachmännischen Weiterbildungen im Rahmen des Erfindungsgedankens. So kann die Erfindung nicht nur an Zündschlössern o. dgl. für Kraftfahrzeuge eingesetzt werden, sondern kann auch an elektronischen Schlössern von Türen in Gebäuden usw. Verwendung finden.

### Bezugszeichen-Liste:

- 1:: Schließsystem
- 2:: elektronischer Schlüssel
- 3:: elektronisches Schloß
- 4:: Autotüre
- 5:: Steuergerät
- 6:: Signalverarbeitungseinrichtung
- 7:: Innenspiegel
- 8:: Betriebssignal (für Autotür)
- 9:: Betriebssignal (für Schloß)
- 10:: Empfangs- und Sendeeinrichtung
- 11:: Aufnahme (am Schloß)
- 12:: Bussystem
- 13:: Betriebsaggregat
- 14:: Betätigungsorgan (am Schlüssel)
- 15:: Frontteil (des Schlüssels)
- 16:: Schaltelement ("Schlüssel-steckt"-Schalter)
- 17:: Schaltelement ("Weck"-Schalter)
- 18:: Gehäuse (von Schloß)
- 19:: Lichtleitstab / Stabelement
- 20:: erstes Ende (von Lichtleitstab)
- 21:: zweites Ende (von Lichtleitstab)
- 22:: optisches Umlenkelement
- 23:: Leiterplatte
- 24:: Rotor
- 25:: Drehsperre
- 26:: Lastschalter
- 27:: Schieber
- 28:: Nut (an Schlüssel)
- 29:: Doppelsperrschieber
- 30,30':: Schieberpaar
- 31,31':: Nut (im Gehäuse)
- 32:: Betätigungsorgan (von Schaltelement)
- 33:: Stößel
- 34:: Zapfen
- 35:: Ansatz
- 36:: Feder (am Stößel)
- 37:: Hülsenelement
- 38:: Feder (am Lichtleitstab)

## Patentansprüche

1. Elektronisches Schloß für ein Schließsystem (1), insbesondere elektronisches Zündschloß für ein Kraftfahrzeug, das mit einem zugehörigen Betriebsaggregat (13), wie einer Motorsteuerung, einer Wegfahrsperre o. dgl., in Verbindung steht, mit einer Aufnahme (11), in die ein zugehöriger elektronischer Schlüssel (2) einführbar ist, und mit wenigstens einem Schaltelement, das durch eine Bewegung des Schlüssels (2) derart betätigbar ist, daß das Schaltelement ein Signal erzeugt, wobei das Signal das Schloß (3) von einem Schlafzustand mit eingeschränkter Funktionalität und verringerter Energieaufnahme in einen Bereitschaftszustand zum Betrieb des Betriebsaggregats (13) versetzt, wobei der in der Aufnahme (11) befindliche Schlüssel (2) mit dem im Bereitschaftszustand befindlichen Schloß (3) wenigstens ein codiertes Betriebssignal (9) austauscht, so daß nach positiver Auswertung des übertragenen Betriebssignals (9) die Freigabe des Schlosses (3) zum Betrieb des Betriebsaggregats (13) auslösbar ist, und wobei nach Beendigung des Betriebs des Betriebsaggregats (13) die Sperrung des Schlosses (3) auslösbar und das Schloß (3) vom Bereitschaftszustand in den Schlafzustand bringbar ist, **dadurch gekennzeichnet, daß** das Schloß (3) ein Schaltelement (16) und ein weiteres Schaltelement (17) aufweist, daß das Schaltelement (16) durch Einführen des Schlüssels (2) in die Aufnahme (11) betätigbar ist und dabei das eine Signal ("Schlüssel-steckt"-Signal) erzeugt, daß das weitere Schaltelement (17) am Beginn eines Bewegungsweges des Schlüssels (2) aus der Ausgangsstellung des Schlosses (3) betätigbar ist und dabei das weitere Signal ("Weck"-Signal) erzeugt, und daß sowohl das eine Signal ("Schlüssel-steckt"-Signal) als auch das weitere Signal ("Weck"-Signal) das Schloß (3) vom Schlafzustand in den Bereitschaftszustand rückführen.

2. Elektronisches Schloß nach Anspruch 1, **dadurch gekennzeichnet, daß** das Schloß (3) mit einer Verzögerungszeit nach Beendigung des Betriebs des Betriebsaggregats (13) und/oder nach Entfernen des Schlüssels (2) aus der Aufnahme (11) vom Bereitschaftszustand in den Schlafzustand versetzbar ist.

3. Elektronisches Schloß nach Anspruch 1 oder 2, **dadurch gekennzeichnet, daß** die Inbetriebnahme des Betriebsaggregats (13) nach Zurücklegen des Bewegungsweges des Schlüssels (2) aus der Ausgangsstellung des Schlosses (3) erfolgt, wenn die Freigabe des Schlosses (3) nach positiver Auswertung des übertragenen Betriebssignals ausgelöst ist.

4. Elektronisches Schloß nach einem der vorangehenden Ansprüche, **dadurch gekennzeichnet, daß** der Schlüssel (2) in der Aufnahme (11) in direkter Wirkverbindung mit einem rotativ und/oder translativ durch den Schlüssel (2) bewegbaren Übertragungselement zur Betätigung des Schaltelements (16, 17) steht, und daß das Schaltelement (16, 17) als elektrischer Schalter ausgebildet ist, dessen Betätigungsorgan (32) einen kleinen Betätigungshub besitzt, daß das Schaltelement (16, 17) mit einem Abstand zum Übertragungselement angeordnet ist, und daß ein im wesentlichen linear beweglicher Stößel (33) einerseits am Übertragungselement angelenkt ist, insbesondere durch eine kraft- und/oder formschlüssige Koppelung, sowie andererseits auf das Betätigungsorgan (32) des Schaltelements (16, 17) einwirkt, wobei bei einem kleinen Bewegungsweg des Schlüssels (2) der Stößel (33) wenigstens um den Betätigungshub bewegbar ist, derart daß das Schaltelement (16, 17) umschaltet.

5. Elektronisches Schloß nach Anspruch 4, **dadurch gekennzeichnet, daß** eine Leiterplatte (23) zur Aufnahme der elektronischen und/oder elektrischen Komponenten mit einem Abstand zum Übertragungselement im Schloß (3) angeordnet ist, daß das Schaltelement (16, 17) sich auf der Leiterplatte (23) befindet, daß vorzugsweise das Schaltelement (16, 17) mit einem in sich gekapselten Gehäuse versehen ist, daß es sich weiter vorzugsweise bei dem Schaltelement (16, 17) um einen Tastschalter handelt, und daß noch weiter vorzugsweise der Tastschalter als SMD(Surface mounted device)-Taste ausgebildet ist, so daß der Tastschalter mit seinen Anschlüssen in SMD-Technik auf der Leiterplatte (23) befestigbar ist.

6. Elektronisches Schloß nach Anspruch 4 oder 5, **dadurch gekennzeichnet, daß** die Koppelung zwischen dem Übertragungselement und dem Stößel (33) aus einer Zapfen-Ansatz-Verbindung (34, 35) besteht, daß vorzugsweise der Stößel (33) mit einer Feder (36) gegen das Betätigungsorgan (32) des Schaltelements (16, 17) vorgespannt ist, derart daß bei der Bewegung des Übertragungselements durch den Schlüssel (2) die Zapfen-Ansatz-Verbindung (34, 35) wenigstens um eine dem Betätigungshub entsprechende Strecke freigegeben ist und der Stößel (33) aufgrund der Federspannung sich in Richtung auf das Betätigungsorgan (32) des Schaltelements (16, 17) bewegt.

7. Elektronisches Schloß nach einem der Ansprüche 4 bis 6, **dadurch gekennzeichnet, daß** das Übertragungselement als Rotor (24) ausgebildet ist, wobei der in der Aufnahme (11) befindliche Schlüssel (2) auf den Rotor (24) zu dessen Drehung einwirkt und wobei eine Drehsperre (25) in und außer Zusammenwirken mit dem Rotor (24) zur Sperrung oder Freigabe des Rotors (24) bringbar ist, daß der Rotor (24) um einen kleinen Freiwinkel, der insbesondere maximal 10 Grad beträgt, bis zum Wirksamwerden der Drehsperre (25) bei gesperrtem Rotor (24) bewegbar ist, daß das Umschalten des Schaltelements (17) bei Bewegung innerhalb des Freiwinkels bewirkbar ist, wobei insbesondere das Schaltelement (17) beim Umschalten das "Weck"-Signal erzeugt, und daß vorzugsweise der freigegebene Rotor (24) bei einer Drehung über den Freiwinkel hinaus mit weiteren, in unmittelbarer Nähe des Rotors (24) befindlichen Schaltelementen in der Art eines Lastschalters (26) beispielsweise über eine Nockensteuerung zusammenwirkt.

8. Elektronisches Schloß nach einem der Ansprüche 4 bis 7, **dadurch gekennzeichnet, daß** das Übertragungselement aus einem linear beweglichen Stabelement (19) sowie einem senkrecht dazu beweglichen Hülsenelement (37) besteht, wobei beim Einführen des Schlüssels (2) in die Aufnahme (11) der Schlüssel (2) auf das Stabelement (19) zu dessen Verschiebung und das Stabelement (19) beispielsweise über eine Kulisse zur Bewegung des Hülsenelements (37) einwirkt, daß der Stößel (33) zum Umschalten des Schaltelementes (16) am Hülsenelement (37) angelenkt ist, wobei insbesondere das Schaltelement (16) beim Umschalten das "Schlüssel-steckt"-Signal erzeugt, und daß vorzugsweise das Stabelement (19), das insbesondere als Lichtleitstab (19) zur Übertragung des optischen Betriebssignals (9) ausgebildet ist, in einem mittigen Durchbruch im Rotor (24) und das Hülsenelement (37) am Rotor (24) angeordnet sind.

## Claims

1. An electronic lock for a locking system (1), in particular an electronic ignition lock for a motor vehicle, which communicates with an associated operating unit (13), such as an engine control unit, an immobiliser or the like, having a housing (11) into which an associated electric key (2) can be introduced, and having at least one control element which can be actuated by a movement of the key (2) in such a manner that the control element generates a signal,
wherein the signal moves the lock (3) from a sleeping mode with restricted functionality and reduced energy consumption into a standby mode for the operation of the operating unit (13),
wherein the key (2) situated in the housing (11) exchanges at least one coded operating signal (9) with the lock (3) in the standby mode so that after positive evaluation of the transmitted operating signal (9) the release of the lock (3) can be initiated for the operation of the operating unit (13), and wherein, after the end of the operation of the operating unit (13) locking of the lock (3) can be initiated and the lock (3) can be brought from the standby mode into the sleeping mode,
**characterised in that** the lock (3) comprises a control element (16) and another control element (17),
**in that** the control element (16) can be actuated by introducing the key (2) into the housing (11) and at the same time generates a signal ("key inserted" signal),
**in that** the other control element (17) can be actuated at the start of a path of motion of the key (2) out of the initial position of the lock (3) and at the same time generates the further signal ("wake-up" signal),
and **in that** both the one signal ("key inserted" signal) and also the other signal ("wake-up" signal) return the lock (3) from the sleeping mode into the standby mode.

2. An electronic lock according to Claim 1,
**characterised in that** the lock (3) can be moved from the standby mode into the sleeping mode with a delay period after the end of the operation of the operating unit (13) and/or after the removal of the key (2) from the housing (11).

3. An electronic lock according to Claim 1 or 2,
**characterised in that** the start-up of the operating unit (13) after the path of motion of the key (2) has been travelled occurs from the initial position of the lock (3) when the release of the lock (3) is initiated after the positive evaluation of the transmitted operating signal.

4. An electronic lock according to one of the preceding Claims,
**characterised in that** the key (2) in the housing (11) is in direct effective communication with a transmission element which can be moved rotationally and/or translationally by the key (2) for the actuation of the control element (16, 17),
and **in that** the control element (16, 17) is constructed as an electric switch, the operating member (32) of which has a small operating stroke,
**in that** the control element (16, 17) is disposed spaced from the transmission element,
and **in that** an essentially linearly moveable tappet (33) is firstly hinged to the transmission element, in particular by a frictional and/or positive coupling, and secondly acts on the operating member (32) of the control element (16, 17), with a small path of motion of the key (2) the tappet (33) being able to move at least by the operating stroke in such a manner that the control element (16, 17) switches over.

5. An electronic lock according to Claim 4,
**characterised in that** a printed circuit board (23) for housing the electronic and/or electric components is disposed in the lock (3) spaced from the transmission element,
**in that** the control element (16, 17) is situated on the printed circuit board (23),
**in that** the control element (16, 17) is preferably provided with an intrinsically enclosed housing,
**in that** the control element (16, 17) is also preferably a pushbutton key,
and **in that** the pushbutton key is again also preferably constructed as an SMD key, so that the pushbutton key can be attached by its connections in SMD technology to the printed circuit board (23).

6. An electronic lock according to Claim 4 or 5,
**characterised in that** the coupling between the transmission element and the tappet (33) consists of a peg-lug connection (34, 35),
**in that** the tappet (33) is preferably prestressed by a spring (36) against the operating member (32) of the control element (16, 17) in such a manner that, upon the movement of the transmission element by the key (2), the peg-lug connection (34, 35) is released at least by a distance corresponding to the operating stroke and the tappet (33) moves by virtue of the spring tension towards the operating member (32) of the switching element (16, 17).

7. An electronic lock according to one of Claims 4 to 6,
**characterised in that** the transmission element is constructed as a rotor (24), with the key (2) situated in the housing (11) acting on the rotor (24) for its rotation and with an anti-twist locking mechanism (25) being able to be brought into and out of interaction with the rotor (24) to lock or release the rotor (24),
**in that** the rotor (24) can move by a small clearance angle, which is at most 10 degrees in particular, until the anti-twist locking mechanism (25) becomes effective with the rotor (24) locked,
**in that** the switching over of the control element (17) can be effected upon movement inside the clearance angle, with in particular the control element (17) generating the "wake-up" signal upon the switching over,
and **in that** the released rotor (24), upon a rotation beyond the clearance angle, preferably interacts with other control elements situated in the direct vicinity of the rotor (24) in the manner of a load switch (26), for example via a cam control.

8. An electronic lock according to one of Claims 4 to 7,
**characterised in that** the transmission element consists of a linearly movable rod element (19) and also a sleeve element (37) that can move perpendicularly thereto, where, upon the introduction of the key (2) into the housing (11), the key (2) acts upon the rod element (19) for its displacement and the rod element (19) acts, for example, via a link to move the sleeve element (37),
**in that** the tappet (33) is hinged to the sleeve element (37) to switch over the control element (16), with the control element (16) in particular generating the "key inserted" signal upon switching over,
and **in that** the rod element (19), which is constructed in particular as a light-conducting rod (19) to transmit the optical operating signal (9), is preferably disposed in a central opening in the rotor (24) and the sleeve element (37) is disposed on the rotor (24).

## Revendications

1. Serrure électronique pour un système de fermeture (1), en particulier serrure de contact électronique pour un véhicule automobile, qui est reliée à un appareil de service (13) correspondant, comme une commande de moteur, un bloqueur de déplacement ou analogue, comportant un récepteur (11) dans lequel une clef électronique correspondante (2) peut être introduite, et comportant au moins un élément de commutation qui peut être actionné par un déplacement de la clef (2) de sorte que l'élément de commutation engendre un signal, le signal déplaçant la serrure (3) d'un état de repos avec une fonctionnalité limitée et une absorption d'énergie diminuée dans une état de disponibilité pour mettre en oeuvre l'appareil de service (13), la clef (2) se trouvant dans le récepteur (11) échangeant avec la serrure (3) se trouvant dans l'état de disponibilité au moins un signal de service codé (9), de sorte que, après évaluation positive du signal de service transmis (9), la libération de la serrure (3) peut être déclenchée pour mettre en oeuvre l'appareil de service (13), et, après achèvement du service de l'appareil de service (13), le blocage de la serrure (3) pouvant être déclenché et la serrure (3) pouvant être amenée de l'état de disponibilité dans l'état de repos,
**caractérisée en ce que** la serrure (3) présente un élément de commutation (16) et un autre élément de commutation (17), **en ce que** l'élément de commutation (16) peut être actionné par l'introduction de la clef (2) dans le récepteur (11) et engendre de plus un signal (signal " clef enfichée "), **en ce que** l'autre élément de commutation (17), au début d'un mouvement de la clef (2), peut être actionné à partir de la position initiale de la serrure (3) et, de plus, engendre l'autre signal (signal " appel "), et **en ce qu'**aussi bien un signal (signal " clef enfichée ") qu'également l'autre signal (signal " appel ") ramènent la serrure (3) de l'état de repos dans l'état de disponibilité.

2. Serrure électronique selon la revendication 1,
**caractérisée en ce que** la serrure (3) peut être déplacée avec un temps de retard après achèvement du service de l'appareil de service (13) et/ou après éloignement de la clef (2) du récepteur (11) de l'état de disponibilité dans l'état de repos.

3. Serrure électronique selon la revendication 1 ou 2,
**caractérisée en ce que** la mise en service de l'appareil de service (13) est effectuée après que la clef (2) a effectué son mouvement à partir de la position initiale de la serrure (3), lorsque la libération de la serrure (3) est déclenchée après évaluation positive du signal de service transmis.

4. Serrure électronique selon une des revendications précédentes,
**caractérisée en ce que** la clef (2), dans le récepteur (11), se trouve en liaison active directe avec un élément de transmission mobile en rotation et/ou en translation par la clef (2) pour actionner l'élément de commutation (16, 17), et **en ce que** l'élément de commutation (16, 17) est réalisé comme interrupteur électrique dont l'organe d'actionnement (32) possède une petite course d'actionnement, **en ce que** l'élément de commutation (16, 17) est agencé à une distance par rapport à l'élément de transmission, et **en ce qu'**un coulisseau (33) mobile de façon généralement linéaire est articulé d'une part à l'élément de transmission, en particulier par un couplage sous l'influence d'une force et/ou par coopération de formas, et agit d'autre part sur l'organe d'actionnement (32) de l'élément de commutation (16, 17), le coulisseau (33) étant déplaçable au moins de la course d'actionnement pour un petit mouvement de la clef (2), de sorte que l'élément de commutation (16, 17) commute.

5. Serrure électronique selon la revendication 4,
**caractérisée en ce qu'**une plaquette conductrice (23) pour la réception des composants électroniques et/ou électriques est agencée à une distance par rapport à l'élément de transmission dans la serrure (3), **en ce que** l'élément de commutation (16, 17) se trouve sur la plaquette conductrice (23), **en ce que**, avantageusement, l'élément de commutation (16, 17) est muni d'un boîtier encapsulé, **en ce que**, concernant l'élément de commutation (16, 17), il s'agit encore avantageusement d'un commutateur à touche, et **en ce que**, encore avantageusement, le commutateur à touche est réalisé comme touche SMD (" surface mounted device "), de sorte que le commutateur à touche peut être fixé par ses raccords suivant la technique SMD sur la plaquette conductrice (23).

6. Serrure électronique selon la revendication 4 ou 5,
**caractérisée en ce que** le couplage entre l'élément de transmission et le coulisseau (33) est constitué d'une liaison tenon-pièce rapportée (34, 35), **en ce que**, avantageusement, le coulisseau (33) est précontraint par un ressort (36) contre l'organe d'actionnement (32) de l'élément de commutation (16, 17), de sorte que, lors du mouvement de l'élément de transmission par la clef (2), la liaison tenon-pièce rapportée (34, 35) est libérée au moins d'une étendue correspondant à la course d'actionnement et le coulisseau (33) se déplace, en raison de la contrainte du ressort, en direction de l'organe d'actionnement (32) de l'élément de commutation (16, 17).

7. Serrure électronique selon une des revendications 4 à 6,
**caractérisée en ce que** l'élément de transmission est réalisé comme rotor (24), la clef (2) se trouvant dans le récepteur (11) agissant sur le rotor (24) pour sa rotation et un bloqueur en rotation (25) pouvant être amené en coopération avec le rotor (24), ou hors de coopération avec celui-ci, pour bloquer ou libérer le rotor (24), **en ce que** le rotor (24) est déplaçable d'un petit angle libre, qui vaut en particulier au maximum 10°, jusqu'à ce que le bloqueur en rotation (25) devienne actif lorsque le rotor (24) est bloqué, **en ce que** la commutation de l'élément de commutation (17) peut être obtenue lors du déplacement à l'intérieur de l'angle libre, l'élément de commutation (17) engendrant en particulier lors de la commutation le signal " appel ", et **en ce que**, avantageusement, le rotor libéré (24), pour une rotation au-delà de l'angle libre, coopère avec d'autres éléments de commutation se trouvant à proximité directe du rotor (24) à la manière d'un rupteur (26) par exempte par l'intermédiaire d'une commande à came.

8. Serrure électronique selon une des revendications 4 à 7,
**caractérisée en ce que** l'élément de transmission est constitué d'un élément de barre linéairement mobile (19) ainsi que d'un élément de manchon (37) mobile perpendiculairement à celui-ci, la clef (2), lors de l'introduction de la clef (2) dans le récepteur (11), agissant sur l'élément de barre (19) pour son déplacement et l'élément de barre (19) agissant par exemple par l'intermédiaire d'une coulisse pour le déplacement de l'élément de manchon (37), **en ce que** le coulisseau (33) est articulé, pour la commutation de l'élément de commutation (16), à l'élément de manchon (37), l'élément de commutation (16) engendrant en particulier lors de la commutation le signal " clef enfichée ", et **en ce que**, avantageusement, l'élément de barre (19), qui est réalisé en particulier comme barre conductrice de lumière (19) pour transmettre le signal de service optique (9), est agencé dans une ouverture centrale dans le rotor (24) et l'élément de manchon (37) est agencé sur le rotor (24).
